# FASCICULE DE BREVET EUROPEEN

(11) **EP 2 898 799 B1**
(45) Date de publication et mention de la délivrance du brevet: **08.03.2017**
(21) Numéro de dépôt: 15150123.6
(22) Date de dépôt: 05.01.2015
(51) Int. Cl.: A47J 27/08

(54) **Système de cuisson à utilisation assistée**
Computergesteuertes Kochsystem
Cooking system with assisted use

(30) Priorité: 07.01.2014 FR 1450102
(43) Date de publication de la demande: 29.07.2015
(73) Titulaire: SEB S.A., 69130 Ecully (FR)
(72) Inventeur: Baraille, Eric, Laurent, 21121 Fontaine les Dijon (FR); Mortier, Bruno, Paul, Albert, 69720 Saint Laurent de Mure (FR)
(74) Mandataire: Soares, Luis Filipe

(56) Documents cités:
- EP-A1- 2 208 448
- EP-A2- 1 342 440
- DE-A1-102011 085 526

## Description

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein.

La présente invention concerne plus particulièrement un système domestique de cuisson d'aliments comprenant un autocuiseur pourvu d'au moins un organe de commande manuel mobile entre une pluralité de positions correspondant respectivement à une pluralité d'états de fonctionnement dudit autocuiseur, lesdites positions étant chacune associées à des marquages d'identification respectifs positionnés sur l'autocuiseur selon une disposition prédéterminée.

La présente invention concerne également un procédé domestique de cuisson d'aliments au moyen d'un autocuiseur pourvu d'au moins un organe de commande manuel mobile entre une pluralité de positions correspondant respectivement à une pluralité d'états de fonctionnement dudit autocuiseur, lesdites positions étant chacune associées à des marquages d'identification respectifs positionnés sur l'autocuiseur selon une disposition prédéterminée.

Les autocuiseurs domestiques sont bien connus. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche. Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Un exemple d'autocuiseurs peut être trouvé dans les publications EP 2 208 448 A1 et DE 10 2011 085526 A1.

Le fonctionnement de ces autocuiseurs connus est gouverné par différents organes, tels que par exemple :
- un moyen de verrouillage / déverrouillage capable d'assurer le verrouillage et le déverrouillage du couvercle relativement à la cuve,
- une soupape de régulation de pression permettant de maintenir la pression dans l'enceinte à un niveau prédéterminé de consigne (éventuellement réglable s'il s'agit d'une soupape tarée à tarage réglable) appelé pression de fonctionnement,
- ou encore un organe de décompression, permettant de faire chuter la pression au sein de l'enceinte, notamment en fin de processus de cuisson, pour que l'utilisateur puisse ouvrir le couvercle dans des conditions de sécurité acceptables.

Chacune de ces fonctions peut être commandée par l'utilisateur grâce à un ou plusieurs moyens de commande correspondant destinés à être actionnés manuellement par l'utilisateur.

On connaît en particulier un appareil de cuisson sous pression doté d'un bouton de commande permettant à l'utilisateur de commander manuellement la décompression de l'enceinte de cuisson, ainsi que le réglage du tarage de la soupape de régulation en fonction notamment de la nature des aliments à cuire. Dans cet autocuiseur connu, le bouton de commande en question est ainsi monté mobile entre cinq positions, savoir :
- une première position correspondant au déclenchement de la décompression de l'enceinte de cuisson ;
- une deuxième position correspondant à un premier niveau de consigne de pression, adapté à la cuisson de légumes ;
- une troisième position correspondant à un deuxième niveau de consigne de pression, adapté à la cuisson de féculents ;
- une quatrième position correspondant à une troisième valeur de consigne de pression adaptée à la cuisson de viandes ;
- et une cinquième position correspondant à une quatrième valeur de consigne de pression particulièrement adaptée à la cuisson de poissons.

A ce bouton de commande viennent s'ajouter des organes de commande du verrouillage / déverrouillage du couvercle relativement à la cuve et un minuteur programmable dont le déclenchement est piloté par un capteur de température.

Compte tenu de ce qui précède, l'utilisation d'un tel autocuiseur peut apparaître de prime abord relativement complexe, rébarbative et / ou anxiogène pour un utilisateur normalement averti, qui souhaite utiliser un tel autocuiseur dans un contexte domestique.

La relative complexité de pilotage d'un tel autocuiseur, qui permet par ailleurs d'obtenir, lorsqu'il est correctement utilisé, des résultats de cuisson tout à fait remarquables, tant sur le plan organoleptique que nutritionnel, conduit au risque de voir l'utilisateur être incapable d'utiliser l'autocuiseur de façon optimale et de tirer pleinement partie de tous ses avantages.

En définitive, les autocuiseurs domestiques modernes connus à ce jour présentent des performances de cuisson remarquables, au prix toutefois d'une conception qui peut apparaître complexe à leurs utilisateurs, de sorte que ces derniers (ou du moins certains d'entre eux) pourraient ne pas exploiter au maximum de leurs fonctionnalités les autocuiseurs en question.

Ce déficit d'ergonomie et de clarté d'information peut même conduire l'utilisateur, dans certaines situations, à ne pas utiliser correctement son autocuiseur (l'utilisateur pensant par exemple avoir lancé un cycle de cuisson sous pression alors qu'il a laissé, sans s'en apercevoir, son autocuiseur en position de décompression) voire même entraîner, dans le cas le plus critique et en combinaison avec d'autres facteurs, un risque éventuel d'accidents, notamment par brûlures.

Les objets assignés à l'invention visent en conséquence à porter remède aux divers inconvénients énumérés précédemment et à proposer un nouveau système domestique de cuisson d'aliments dont l'utilisation est particulièrement simple, intuitive, ergonomique et sûre.

Un autre objet de l'invention vise à proposer un nouveau système domestique de cuisson d'aliments dont l'utilisation est extrêmement aisée et ne nécessite aucun apprentissage particulier au préalable.

Un autre objet de l'invention vise à proposer un nouveau système domestique de cuisson d'aliments de construction simple et robuste.

Un autre objet de l'invention vise à proposer un nouveau système domestique de cuisson d'aliments particulièrement agréable à utiliser et qui limite les possibilités pour l'utilisateur de commettre des erreurs dans son maniement.

Un autre objet de l'invention vise à proposer un nouveau système domestique de cuisson d'aliments dont les fonctionnalités sont améliorées et qui permet à l'utilisateur de mettre en oeuvre un cycle de cuisson optimal et adapté à la nature des aliments concernés.

Un autre objet de l'invention vise à proposer un nouveau système domestique de cuisson d'aliments dont la conception générale est particulièrement simple et robuste et compacte.

Un autre objet de l'invention vise à proposer un nouveau système domestique de cuisson d'aliments particulièrement fiable et compact.

Un autre objet de l'invention vise également à proposer un nouveau procédé domestique de cuisson d'aliments qui permet de mettre en oeuvre un cycle optimal de cuisson de façon extrêmement simple et rapide.

Les objets assignés à l'invention sont atteints à l'aide d'un système domestique de cuisson d'aliments comprenant un autocuiseur pourvu d'au moins un organe de commande manuel mobile entre une pluralité de positions correspondant respectivement à une pluralité d'états de fonctionnement dudit autocuiseur, lesdites positions étant chacune associées à des marquages d'identification respectifs positionnés sur l'autocuiseur selon une disposition prédéterminée, ledit système étant caractérisé en ce qu'il comprend une interface graphique d'assistance à l'utilisation de l'autocuiseur, destinée à être mise en oeuvre sur un terminal informatique pourvu d'un écran d'affichage, ladite interface graphique étant conçue pour afficher sur ledit écran d'affichage d'une part des pictogrammes virtuels correspondant respectivement auxdits marquages d'identification et positionnés à l'écran selon une disposition correspondant sensiblement à ladite disposition prédéterminée et d'autre part un pointeur virtuel destiné à désigner l'un desdits pictogrammes, ledit système comprenant également un dispositif de télécommunication sans fil destiné à relier lesdits autocuiseur et terminal et conçu pour que la position dudit organe de commande manuel commande la position du pointeur virtuel, de façon que ledit pointeur virtuel désigne le pictogramme correspondant au marquage associé à la position instantanée de l'organe de commande manuel.

Les objets assignés à l'invention sont également atteints à l'aide d'un procédé domestique de cuisson d'aliments au moyen d'un autocuiseur pourvu d'au moins un organe de commande manuel mobile entre une pluralité de positions correspondant respectivement à une pluralité d'états de fonctionnement dudit autocuiseur, lesdites positions étant chacune associées à des marquages d'identification respectifs positionnés sur l'autocuiseur selon une disposition prédéterminée, ledit procédé étant caractérisé en ce qu'il comprend la mise en oeuvre par un utilisateur, sur un terminal informatique pourvu d'un écran d'affichage, d'une interface graphique d'assistance à l'utilisation de l'autocuiseur, ladite interface graphique affichant sur ledit écran d'affichage d'une part des pictogrammes virtuels correspondant respectivement auxdits marquages d'identification et positionnés à l'écran selon une disposition correspondant sensiblement à ladite disposition prédéterminée et d'autre part un pointeur virtuel destiné à désigner !'un desdits pictogrammes, lesdits autocuiseur et terminal étant reliés par un dispositif de télécommunication sans fil conçu pour que la position dudit organe de commande manuel commande la position du pointeur virtuel, de façon que ledit pointeur virtuel désigne le pictogramme correspondant au marquage associé à la position instantanée de l'organe de commande manuel.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :

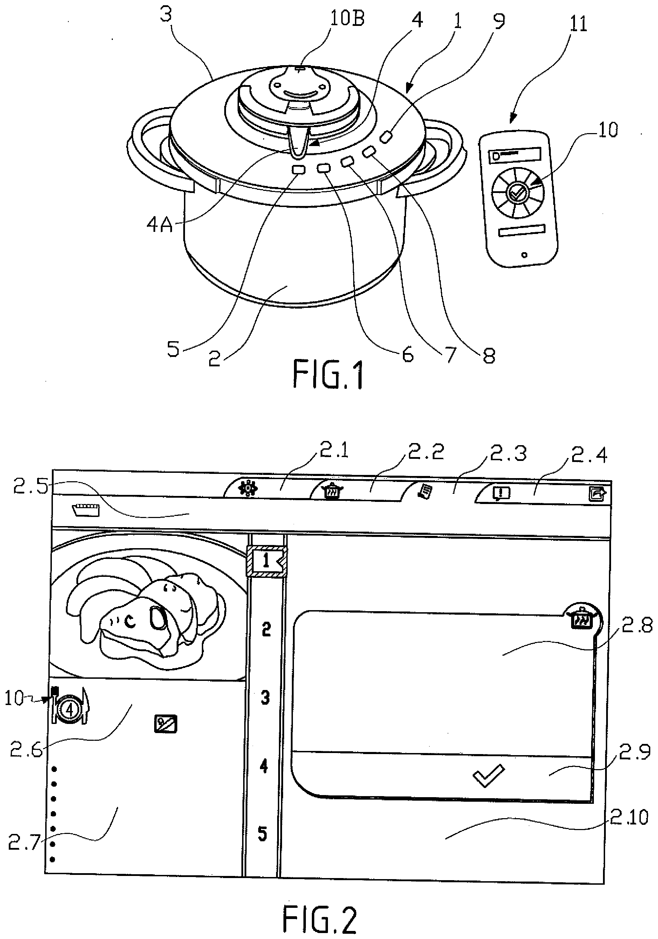

- La figure 1 illustre selon une vue schématique en perspective, un système domestique de cuisson d'aliments conforme à l'invention, incluant d'une part un autocuiseur et d'autre part une interface graphique d'assistance à l'utilisation de l'autocuiseur mise en oeuvre sur un terminal informatique formé en l'espèce par un ordiphone (ou « *smartphone* » en anglais)
- Les figures 2 à 17 illustrent différentes copies d'écrans ou portions de copies d'écran de l'ordiphone de la figure 1 lorsque l'interface graphique d'assistance à l'utilisation de l'autocuiseur est mise en oeuvre, lesdites figures 1 à 17 correspondants respectivement à différentes étapes et / ou situations relatives à la réalisation d'une recette de cuisine au moyen de l'autocuiseur du système de la figure 1.

L'invention concerne un système domestique de cuisson d'aliments, c'est-à-dire un système destiné à cuire des aliments dans un contexte familial, qui ne relève donc notamment pas de la restauration collective.

Le système domestique de cuisson d'aliments conforme à l'invention comprend un autocuiseur 1 destiné à assurer la cuisson des aliments sous pression de vapeur. L'autocuiseur 1 est bien entendu en l'espèce un autocuiseur domestique, ce qui suppose en particulier qu'il forme un ustensile de cuisine présentant un caractère portatif (c'est-à-dire déplaçable manuellement) et indépendant. Avantageusement, l'autocuiseur 1 conforme à l'invention est passif thermiquement, c'est-à-dire qu'il est conçu pour monter en pression sous l'effet d'une source de chauffe qui lui est extérieure, telle qu'une plaque de cuisson. Il est cependant tout à fait envisageable, sans pour autant que l'on sorte du cadre de l'invention, que la source de chauffe fasse partie de l'autocuiseur 1 (comme c'est le cas pour les autocuiseurs électriques).

Comme cela est bien connu en tant que tel, l'autocuiseur 1 conforme à l'invention comprend une cuve 2 formant un récipient de cuisson et présentant avantageusement sensiblement une symétrie de révolution selon un axe vertical central. La cuve 2 est par exemple, et de manière classique, fabriquée par emboutissage d'un flanc en matériau métallique tel que l'aluminium ou l'acier inoxydable. Un fond thermo-conducteur peut avantageusement être rapporté, par exemple par frappe à chaud, sur le fond du récipient obtenu par emboutissage, afin de former une cuve 2 équipée d'un fond thermo-conducteur.

L'autocuiseur 1 conforme à l'invention comprend également un couvercle 3 destiné à être rapporté sur la cuve 2 pour former avec cette dernière une enceinte de cuisson sensiblement étanche, c'est-à-dire suffisamment hermétique pour permettre une montée en pression significative en son sein, par exemple à un niveau excédant la pression atmosphérique d'une valeur comprise entre 4 kPa et 150 kPa. Le couvercle 3 est avantageusement réalisé en un matériau métallique (par exemple en acier inoxydable) et affecte préférentiellement une forme générale discoïde, complémentaire de la forme de la cuve 2 à laquelle il est associé pour former l'enceinte de cuisson. Le couvercle 3 est conçu pour être verrouillé / déverrouillé à volonté relativement à la cuve 2, le verrouillage du couvercle 3 permettant à l'enceinte de monter en pression sans échappement du couvercle 3 sous l'effet de la pression interne à l'autocuiseur.

A cette fin, l'autocuiseur 1 comprend un moyen de verrouillage / déverrouillage du couvercle 3 sur la cuve 2, qui peut être de l'espèce de tout type connu de l'homme du métier (système de verrouillage à étrier, à baïonnettes, à mâchoires, à segments, etc.). Le moyen de verrouillage / déverrouillage peut de façon classique être susceptible d'évoluer entre une configuration de verrouillage du couvercle 3 relativement à la cuve 2 dans laquelle le couvercle 3 est solidarisé à la cuve 2 de façon à autoriser la montée en pression, et une configuration de déverrouillage du couvercle 3 relativement à la cuve 2 dans laquelle le couvercle 3 peut être librement séparé de la cuve 2, de façon manuelle par l'utilisateur.

L'autocuiseur 1 du système conformément à l'invention est pourvu par ailleurs d'au moins un organe de commande manuel 4 mobile entre une pluralité de positions correspondant respectivement à une pluralité d'états de fonctionnement dudit autocuiseur 1. En d'autres termes, l'organe de commande manuel 4 permet à l'utilisateur de piloter une ou plusieurs des fonctions de l'autocuiseur 1, comme par exemple à titre purement illustratif et non limitatif, la décompression de l'enceinte de cuisson et / ou le réglage du niveau de pression de fonctionnement et / ou le verrouillage / déverrouillage du couvercle 3 relativement à la cuve 2, etc.

Dans l'exemple illustré aux figures, l'autocuiseur 1 comprend plusieurs organes de commande manuels incluant en particulier un organe de commande manuel 4 permettant à l'utilisateur de commander manuellement à la fois la décompression de l'autocuiseur 1 et le réglage du niveau de pression de fonctionnement. Le verrouillage / déverrouillage du couvercle 3 relativement à la cuve 2 est quant à lui commandé par un autre organe de commande, formé en l'espèce par une anse rotative conçue pour contrôler le déplacement radial de mâchoires de verrouillage relativement au couvercle 3.

Lesdites positions susceptibles d'être adoptées par l'organe de commande manuel 4 sont chacune associées à des marquages d'identification 5, 6, 7, 8, 9 respectifs positionnés sur l'autocuiseur 1, par exemple à la surface du couvercle 3 (de façon à être parfaitement visible par l'utilisateur) selon une disposition prédéterminée, comme illustré aux figures.

Les marquages d'identification 5, 6, 7, 8, 9 sont conçus pour permettre à l'utilisateur d'identifier, directement ou indirectement, quelle fonction est associée à quelle position de l'organe de commande manuel 4. Par exemple, dans le mode de réalisation de la figure 1, un premier marquage d'identification 5 correspond à la décompression de l'appareil, tandis que des deuxième, troisième, quatrième et cinquième marquages d'identification 6, 7, 8, 9 correspondent respectivement à quatre niveaux de pression de fonctionnement (valeurs de consigne) différents. Les marquages d'identification 5, 6, 7, 8, 9 peuvent être réalisés par tout moyen connu, et être par exemple imprimés directement sur la surface du couvercle 3 ou sur un habillage en matière plastique dudit couvercle 3, et/ou être réalisés en creux ou en relief. Chaque marquage d'identification 5, 6, 7, 8, 9 est avantageusement constitué d'un pictogramme qui symbolise la fonction associée à la position concernée de l'organe de commande manuel 4. Par exemple, le premier marquage d'identification 5 peut représenter un jet de vapeur (symbolisant la décompression), tandis que le deuxième marquage d'identification 6 peut représenter une carotte (pour symboliser le fait que le niveau de pression de fonctionnement correspondant est particulièrement bien adapté à la cuisson de légumes), le troisième marquage d'identification 7 représentant des pommes de terres et un épi de blé, afin de symboliser le fait que le niveau de pression de fonctionnement associé à la position correspondante de l'organe de commande manuel 4 est particulièrement bien adapté à la cuisson de féculents, le quatrième marquage d'identification 8 représentant quant à lui un poulet afin de symboliser le fait que le niveau de pression correspondant à la position de l'organe de commande manuel 4 associé est particulièrement bien adapté à la cuisson de viandes, tandis que le cinquième marquage d'identification 9 représente quant à lui un poisson pour symboliser le fait que la position associée de l'organe de commande manuel 4 correspond à un niveau de pression de fonctionnement particulièrement bien adapté à la cuisson de poisson. Il est cependant tout à fait envisageable, sans pour autant que l'on sorte du cadre de l'invention, que les marquages d'identification 5, 6, 7, 8, 9 représentent de simples symboles abstraits (points, crans, etc.).

Afin de permettre une utilisation aisée et intuitive de l'autocuiseur 1, les positions susceptibles d'être adoptées par l'organe de commande manuel 4 sont des positions prédéterminées séparées par une distance et / ou un secteur angulaire constant(s). Les marquages d'identification respectifs correspondant 5, 6, 7, 8, 9 sont quant à eux avantageusement disposés de façon fixe sur l'autocuiseur 1, et de préférence à la surface du couvercle 3, c'est-à-dire que la position desdits marquages d'identification 5, 6, 7, 8, 9 relativement au couvercle 3 est fixe. Au contraire, l'organe de commande manuel 4 est avantageusement embarqué sur le couvercle 3 tout en étant mobile relativement à ce dernier entre les différentes positions susvisées.

L'organe de commande manuel 4 inclut avantageusement un organe de préhension destiné à être déplacé manuellement par l'utilisateur entre les différentes positions susvisées, et un organe de pointage qui pointe vers le marquage d'identification (par exemple le premier marquage d'identification 5 dans la situation illustrée à la figure 1) correspondant à la position instantanée dans laquelle se trouve l'organe de commande manuel 4. Par exemple, l'organe de commande manuel 4 comprend un curseur 4A qui forme à la fois un organe de préhension et un organe de pointage, ledit curseur 4A étant par exemple monté à rotation selon un axe vertical central (correspondant à l'axe de révolution de la cuve 2). Dans ce mode de réalisation préférentiel, où l'organe de commande manuel 4 est rotatif, lesdits marquages d'identification 5, 6, 7, 8, 9 sont avantageusement positionnés les uns à la suite des autres sur un arc de cercle, et sont de préférence régulièrement espacés le long dudit arc de cercle.

L'autocuiseur 1 du système selon l'invention comprend avantageusement, et de manière bien connue en tant que telle, une soupape de régulation de pression, qui est de préférence montée sur le couvercle 3 (et même embarquée sur ce dernier), et est conçue pour maintenir la pression régnant dans l'autocuiseur 1 (c'est-à-dire dans l'enceinte de cuisson formée par l'association de la cuve 2 et du couvercle 3) sensiblement à une valeur de consigne, appelée communément *« pression de fonctionnement* » *ou « pression de régulation* », et excédant par exemple la pression atmosphérique d'une valeur comprise entre 4 kPa et 150 kPa, et de préférence comprise entre 15 et 150 kPa. La soupape de régulation est avantageusement conçue pour être sensible à la pression régnant dans l'enceinte de cuisson, et être mobile entre au moins une première position dans laquelle elle ferme la communication de l'enceinte vers l'extérieur tant que la pression interne est inférieure ou égale à une pression prédéterminée P₀ correspondant à la valeur de consigne et une deuxième position dans laquelle elle met en communication l'intérieur de l'enceinte avec l'extérieur dès que la pression interne dépasse sensiblement la pression prédéterminée P₀. La soupape de régulation permet ainsi de maintenir la pression à un seuil prédéterminé P₀ (qui correspond à la valeur de consigne), valeur au-delà de laquelle la soupape assure une fuite de vapeur régulant la pression interne de l'autocuiseur. La soupape de régulation pourra être de tout type connu de l'homme du métier, et être par exemple formée par une soupape à poids ou à ressort de compression, montée mobile sur le couvercle. Ladite soupape de régulation peut occuper une position inférieure d'étanchéité (position d'obturation) dans laquelle elle est rappelée sous l'effet de son propre poids (ou sous l'effet de la force de rappel exercée par le ressort de compression) sur un siège ménagé à travers un perçage lui-même réalisé à travers le couvercle 3. La soupape peut également être repoussée dans une position haute sous l'effet de la pression interne régnant dans l'autocuiseur, lorsque cette dernière dépasse la valeur prédéterminée P₀ de fonctionnement. Dans cette position, la soupape s'élève et dégage l'orifice ménagé à travers le couvercle et par lequel la vapeur peut s'échapper vers l'extérieur.

Avantageusement, l'autocuiseur 1 comprend un conduit d'échappement de vapeur, par lequel ladite soupape de régulation autorise la vapeur à s'échapper hors de l'autocuiseur 1 dès que la pression régnant au sein de l'autocuiseur excède ladite valeur de consigne. A cette fin, le conduit est avantageusement monté à l'aval de la soupape relativement au sens d'échappement de la vapeur, de sorte que ladite soupape est interposée entre le perçage ménagé à travers le couvercle 3 et le conduit d'échappement. Ainsi, lorsque la pression régnant au sein de l'autocuiseur dépasse la valeur de consigne, la soupape s'élève (à l'encontre de son propre poids et / ou de la force de rappel exercée par un éventuel ressort de compression) et dégage le perçage ménagé à travers le couvercle 3, à travers lequel la vapeur peut s'échapper pour emprunter ensuite le conduit d'échappement qui la canalisera jusqu'à l'extérieur de l'autocuiseur 1.

Tel que cela est bien connu en soi de l'homme du métier, la soupape de régulation de pression peut être avantageusement une soupape tarée à tarage réglable, permettant à l'utilisateur de sélectionner une valeur de consigne prédéterminée (pression de fonctionnement P₀) parmi un choix de plusieurs valeurs prédéterminées (par exemple quatre dans le mode de réalisation illustré aux figures) en fonction du type d'aliments présents dans l'autocuiseur. De préférence, la soupape de régulation est ainsi équipée d'un système de tarage formé par un ressort de compression qui exerce sur la soupape une force de rappel en position d'obturation plus ou moins importante, et qui peut être réglée en comprimant plus ou moins le ressort, tel que cela est bien connu en tant que tel.

Comme évoqué auparavant, l'organe de commande manuel 4 est avantageusement conçu pour régler ledit tarage, de sorte qu'au moins deux desdites positions de l'organe de commande manuel 4 correspondent respectivement à deux tarages différents, c'est-à-dire à deux valeurs de consigne prédéterminées différentes. Dans un mode de réalisation préférentiel, l'organe de commande manuel 4 est ainsi conçu pour comprimer de façon plus ou moins importante un ressort qui assure le tarage de la soupape de régulation, afin ainsi de régler la valeur de consigne.

Dans le mode de réalisation illustré aux figures, quatre desdites positions de l'organe de commande manuel 4 correspondent respectivement à quatre tarages différents, qui eux-mêmes correspondent à quatre valeurs de consignes différentes, chacune étant optimale pour un type d'aliment spécifique (en l'espèce : légumes, féculents, viandes et poissons).

Dans le mode de réalisation avantageux illustré aux figures, et comme déjà évoqué dans ce qui précède, l'autocuiseur 1 comprend un dispositif de décompression activable conçu pour faire chuter la pression régnant au sein de l'autocuiseur 1 lorsqu'il est activé. De préférence, ledit dispositif de décompression est conçu pour pouvoir être activé quel que soit le niveau de pression régnant dans l'enceinte, afin de mettre en communication l'intérieur de l'enceinte avec l'extérieur et permettre un échappement de vapeur qui entraînera une baisse de la pression dans l'enceinte jusqu'à un niveau autorisant le déverrouillage du couvercle 3 relativement à la cuve 2 sans risque pour l'utilisateur. Par exemple, le dispositif de décompression activable est réalisé au moyen de la soupape de régulation de pression, qui peut être par exemple conçue soit pour être placée dans une position de fuite correspondant à l'activation du dispositif de décompression, soit par le réglage du tarage de la soupape à une valeur de consigne très faible qui permet de faire chuter considérablement la pression régnant au sein de l'enceinte.

De façon préférentielle, l'organe de commande manuel 4 est conçu pour commander l'activation du dispositif de décompression.

Ainsi, dans le mode de réalisation préférentiel illustré aux figures, l'organe de commande manuel 4 est conçu pour commander d'une part l'activation du dispositif de décompression, lorsqu'il se trouve dans la position correspondant au premier marquage d'identification 5, et d'autre part pour commander le réglage du tarage de la soupape de régulation à différentes valeurs de consignes correspondant respectivement aux deuxième, troisième, quatrième et cinquième marquages d'identification 6, 7, 8, 9.

Conformément à une caractéristique importante de l'invention, le système comprend, outre l'autocuiseur 1, une interface graphique 10 d'assistance à l'utilisation de l'autocuiseur 1, destinée à être mise en oeuvre sur un terminal informatique 11 pourvu d'un écran d'affichage. Le terminal informatique 11, qui fait avantageusement partie du système selon l'invention, est totalement indépendant de l'autocuiseur 1, et présente avantageusement un caractère portatif et est de préférence conçu pour pouvoir être transporté et manipulé à une ou deux mains par un utilisateur. De préférence, le terminal informatique 11 est constitué par un ordiphone (en anglais « *smartphone »*), une tablette tactile (du genre Apple iPad ®) ou un ordinateur portable, de préférence équipé de la technologie Bluetooth ®.

L'interface graphique 10 est mise en oeuvre par un (ou plusieurs) logiciel installé sur le terminal informatique 11, et qui produit à l'écran des informations écrites ou dessinées, au caractère interactif, afin de guider l'utilisateur dans son utilisation de l'autocuiseur 1, de préférence en temps réel, à la manière d'un « *coach* » virtuel.

L'interface graphique 10 est conçue pour afficher sur l'écran d'affichage du terminal informatique 11 d'une part des pictogrammes virtuels 12, 13, 14, 15, 16 correspondant respectivement auxdits marquages d'identification 5, 6, 7, 8, 9 et positionnés à l'écran selon une disposition correspondant sensiblement à ladite disposition prédéterminée des marquages d'identification 5, 6, 7, 8, 9 et d'autre part un pointeur virtuel 17 destiné à désigner l'un desdits pictogrammes 12, 13, 14, 15, 16.

Ainsi, l'interface graphique 10 fait apparaître sur l'écran du terminal informatique 11 un objet graphique (virtuel) qui reproduit, plus ou moins fidèlement, les marquages d'identification 5, 6, 7, 8, 9 et leur agencement sur le couvercle 3 de l'autocuiseur. L'utilisateur dispose ainsi d'une part d'un agencement réel de marquages d'identification 5, 6, 7, 8, 9 et d'autre part d'un agencement virtuel de pictogrammes 12, 13, 14, 15, 16 correspondants.

De préférence, chaque pictogramme virtuel 12, 13, 14, 15, 16 est constitué par une icône représentant un motif visuel sensiblement identique à celui formant le marquage d'identification 5, 6, 7, 8, 9 correspondant. Ainsi, l'utilisateur comprend immédiatement à quel marquage d'identification 5, 6, 7, 8, 9 correspond chaque pictogramme virtuel 12, 13, 14, 15, 16, puisque chaque pictogramme virtuel 12, 13, 14, 15, 16 reproduit plus ou moins fidèlement l'apparence du marquage d'identification 5, 6, 7, 8, 9 correspondant.

De préférence, les pictogrammes virtuels 12, 13, 14, 15, 16 sont positionnés à l'écran selon une disposition sensiblement identique à la disposition prédéterminée des marquages d'identification 5, 6, 7, 8, 9 respectifs. Par exemple, dans le mode de réalisation illustré aux figures, les pictogrammes virtuels 12, 13, 14, 15, 16 sont disposés selon un arc de cercle, de la même façon que les marquages d'identification 5, 6, 7, 8, 9 réels sont disposés selon un arc de cercle sur l'autocuiseur 1. Ceci permet là encore à l'utilisateur de comprendre au premier coup d'oeil que l'interface graphique 10 reproduit virtuellement les marquages d'identification 5, 6, 7, 8, 9 présents réellement sur l'autocuiseur 1 du système selon l'invention.

Il est cependant tout à fait envisageable, sans pour autant que l'on sorte du cadre de l'invention, que la disposition des pictogrammes virtuels 12, 13, 14, 15, 16 ne soit pas strictement identique à celles des marquages d'identification 5, 6, 7, 8, 9 correspondants, pour autant par exemple que la disposition des pictogrammes virtuels 12, 13, 14, 15, 16 rappelle, par l'ordre de positionnement des pictogrammes 12, 13, 14, 15, 16 par exemple, la disposition des marquages d'identification 5, 6, 7, 8, 9 correspondants. Ainsi, il est par exemple envisageable que les marquages d'identification 5, 6, 7, 8, 9 soient disposés à la suite les uns des autres selon un arc de cercle, tandis que les pictogrammes virtuels correspondants 12, 13, 14, 15, 16 sont disposés selon une ligne droite mais dans le même ordre que les marquages d'identification respectifs 5, 6, 7, 8, 9 correspondants.

Le pointeur virtuel 17 peut quant à lui par exemple comprendre, comme illustré aux figures, un curseur (virtuel) conçu pour pointer vers le pictogramme qu'il vise à désigner. L'invention n'est cependant pas limitée à la mise en oeuvre d'un tel curseur, et il est par exemple tout à fait envisageable que le pointeur virtuel 17 soit plutôt constitué par une icône qui vient se superposer à, ou remplacer le, pictogramme 12, 13, 14, 15, 16 désigné par le pointeur virtuel 17. Dans ce cas, l'icône en question peut par exemple être sensiblement identique au pictogramme virtuel concerné, mais exhiber une couleur différente et/ou être plus lumineuse (effet de surbrillance) et/ou être d'une taille plus importante et/ou clignoter, etc.

Le système conforme à l'invention comprend également un dispositif de télécommunication sans fil destiné à relier (sans liaison physique du genre fil ou câble), par exemple par des ondes électromagnétiques, radio, infrarouge ou autres, ledit autocuiseur 1 et terminal 11, de façon à permettre un transfert de données analogiques et/ou numériques entre ces derniers, et en particulier de l'autocuiseur 1 vers le terminal 11.

De préférence, le dispositif de télécommunication sans fil est conçu pour relier lesdits autocuiseur 1 et terminal 11 au moyen de la technologie Bluetooth® et de façon encore plus préférentielle en utilisant le protocole « *Bluetooth 4.0, Bluetooth low energy* »*.*

Le dispositif de télécommunication sans fil est conçu pour que la position dudit organe de commande manuel 4 commande la position du pointeur virtuel 17, de façon que ledit pointeur virtuel 17 désigne le pictogramme 12, 13, 14, 15, 16 correspondant au marquage 5, 6, 7, 8, 9 associé à la position instantanée de l'organe de commande manuel 4.

En d'autres termes, le dispositif de télécommunication sans fil, l'autocuiseur et l'interface graphique 10 sont conçus pour que le dispositif de télécommunication sans fil assure une liaison fonctionnelle entre l'autocuiseur 1 et le terminal 11 permettant au pointeur virtuel 17 de désigner sensiblement immédiatement, en temps réel, un seul pictogramme qui correspond à celui associé à la position adoptée sensiblement au même instant par l'organe de commande manuel 4. De préférence, le pointeur virtuel 17 comprend un curseur (virtuel) conçu pour pointer vers le pictogramme 12, 13, 14, 15, 16 correspondant au marquage 5, 6, 7, 8, 9 associé à la position instantanée de l'organe de commande manuel 4.

Le pointeur virtuel 17 est ainsi conçu pour se déplacer d'un pictogramme virtuel 12, 13, 14, 15, 16 à l'autre en réponse à un déplacement sensiblement concomitant de l'organe de commande manuel 4, de sorte que l'utilisateur est en mesure de connaître la position de l'organe de commande manuel 4 uniquement en observant l'interface graphique 10 de façon à prendre connaissance de la position du pointeur virtuel 17.

De préférence, toutes les positions fonctionnelles prédéterminées susceptibles d'être occupées par l'organe de commande 4 (positions qui sont de ce fait chacune associées à un marquage d'identification respectif) sont répercutées au niveau de l'interface graphique 10, qui est capable de reproduire virtuellement ladite position selon le principe exposé dans ce qui précède.

Il est cependant parfaitement envisageable, sans pour autant que l'on sorte du cadre de l'invention, qu'une partie seulement des positions susceptibles d'être occupées par l'organe de commande 4 (positions qui sont de ce fait chacune associées à un marquage d'identification respectif) soient conçues pour être répercutées au niveau de l'interface graphique 10, auquel cas la « *pluralité de positions »* visée dans ce qui précède n'inclut pas toutes les positions fonctionnelles susceptibles d'être adoptées par l'organe de commande 4.

Cette caractéristique technique consistant à répercuter au niveau de l'interface graphique 10 la position instantanée de l'organe de commande manuel 4 (pour autant que cette position fasse partie bien entendu de la « *pluralité de positions »* concernées), permet de procurer une assistance particulièrement simple et efficace à l'utilisateur pour l'utilisation de l'autocuiseur 1, en permettant à l'utilisateur de visualiser directement et instantanément sur l'écran du terminal informatique 11, la position réelle de l'organe de commande manuel 4, permettant ainsi à l'interface graphique de confirmer par exemple que cette position est adéquate en regard du déroulement du cycle de cuisson, ou au contraire de signaler une position incorrecte de l'organe de commande manuel 4 qui entraînerait un défaut dans le cycle de cuisson.

Afin de commander la position du pointeur virtuel 17 par la manipulation de l'organe de commande manuel 4, le système comprend avantageusement un organe de détection de la position de l'organe de commande 4, ledit organe de détection de la position de l'organe de commande 4 étant conçu pour produire un signal représentatif de ladite position, signal que le dispositif de télécommunication sans fil est conçu pour transmettre audit terminal 11 afin de commander la position du pointeur virtuel 17.

Ainsi, l'organe de détection de la position de l'organe de commande 4 génère avantageusement un signal électrique représentatif de la position instantanée occupée par l'organe de commande 4. Ce signal électrique est transmis, de préférence immédiatement, par le dispositif de télécommunication sans fil, au terminal informatique 11, de façon à ce que ledit signal soit traité par l'interface graphique 10 qui en retour fera en sorte que le pointeur virtuel 17 désigne le pictogramme 12, 13, 14, 15, 16 correspondant au marquage 5, 6, 7, 8, 9 associé à la position instantanée de l'organe de commande manuel 4.

L'organe de détection de la position de l'organe de commande 4 peut être de tout type connu de l'homme du métier. De préférence, l'organe de détection en question est conforme à l'enseignement du document WO-2010/081994, dont le contenu est incorporé par référence. Dans ce mode de réalisation avantageux, l'organe de détection inclut par exemple au moins un capteur et au moins un activateur conçu pour exciter à distance ledit capteur lorsque l'organe de commande 4 occupe une position prédéterminée, de façon que l'atteinte, par l'organe de commande 4, de ladite position prédéterminée commande l'émission dudit signal représentatif de la position instantanée de l'organe de commande 4. Par exemple, comme prévu dans la demande de brevet WO-2010/081994, l'organe de commande manuel embarque un aimant formant un activateur pour des capteurs magnéto-résistifs (par exemple fabriqués selon la technologie CMOS) qui sont quant à eux montés fixe en position sur le couvercle 3, de façon que ledit aimant activateur puisse exciter sélectivement un ou plusieurs desdits capteurs magnéto-résistifs en fonction de la position de l'organe de commande manuel 4, et ainsi coder cette dernière.

Avantageusement le dispositif de télécommunication sans fil comprend un module émetteur embarqué sur l'autocuiseur 1, et par exemple embarqué sur le couvercle 3, et un module récepteur inclus (par exemple par construction si le dispositif de télécommunication est de type Bluetooth ®) dans le terminal 11. Avantageusement, ledit module émetteur inclut une pluralité de capteurs magnéto-résistifs (« *MR sensors* ») disposés à intervalles réguliers, par exemple sur un arc de cercle, de façon à pouvoir chacun être activé sélectivement par un aimant porté par l'organe de commande manuel 4. Le module émetteur est alors capable d'émettre, par exemple par voie hertzienne, un signal représentatif de la position instantanée de l'organe de commande 4 en direction du module récepteur, afin que le module récepteur communique à l'interface graphique le signal en question, de façon que ladite interface graphique fasse en sorte en retour que ledit pointeur virtuel 17 désigne le pictogramme correspondant au marquage associé à la position fonctionnelle instantanée de l'organe de commande manuel 4.

De préférence, l'autocuiseur 1 comprend par ailleurs un détecteur conçu à la fois pour détecter l'instant où la pression régnant dans l'autocuiseur atteint sensiblement ladite valeur de consigne pour la première fois (l'instant en question marquant donc le début du cycle de cuisson à la pression de fonctionnement) et pour produire en réponse un signal de déclenchement que le dispositif de télécommunication sans fil est conçu pour transmettre au terminal 11 afin de déclencher un décompte d'une durée prédéterminée par le terminal 11, ladite durée prédéterminée correspondant en l'espèce à une durée souhaitée de cuisson des aliments à la pression de fonctionnement. Cette durée prédéterminée est avantageusement déterminée automatiquement par le système, en fonction par exemple de la recette suivie par l'utilisateur. De préférence le détecteur en question est avantageusement conçu pour fonctionner selon le principe décrit dans le document EP-1 458 268, dont le contenu est incorporé par référence.

Dans ce mode de réalisation préférentiel, le détecteur en question comporte ainsi avantageusement un capteur de température disposé dans le, et / ou au voisinage du, conduit d'échappement de vapeur évoqué précédemment pour permettre audit capteur de température de capter l'augmentation de température résultant dudit échappement de vapeur à travers le conduit, et de produire en réponse ledit signal de déclenchement. De préférence, le capteur de température est conçu pour produire un signal électrique qui est transmis au module émetteur, lequel l'envoie alors au module récepteur pour son traitement par le terminal 11 et l'interface graphique 10 associée à ce dernier.

Avantageusement, l'interface graphique 10 est conçue pour afficher sur ledit écran d'affichage du terminal 11, ledit décompte de ladite durée prédéterminée, sous la forme par exemple d'un compte à rebours.

De préférence, l'interface graphique 10 est par ailleurs conçue pour afficher sur l'écran du terminal 11 un outil virtuel de réglage de ladite durée prédéterminée, se présentant par exemple sous la forme d'un bouton « + » 18 et d'un bouton « - » 19, qui peuvent être actionnés par l'utilisateur soit par appui direct sur l'écran (dans le cas d'un écran formé par une dalle tactile) soit au moyen d'un dispositif de pointage commandé par un dispositif périphérique de commande relié au terminal 11 (souris par exemple). L'actionnement du bouton « + » 18 permet d'incrémenter la durée prédéterminée à décompter d'un pas prédéterminé (par exemple 5 secondes ou 30 secondes) tandis que le bouton « - » 19 permet au contraire de décrémenter du même pas la durée prédéterminée à décompter, pour ajuster cette dernière.

Avantageusement, l'interface graphique 10 est conçue pour inviter en temps utile un utilisateur à manipuler l'organe de commande manuel 4 pour le placer dans une position spécifique, afin par exemple de lancer ou d'optimiser le processus de cuisson sous pression, ladite interface 10 étant également conçue pour émettre soit un signal d'erreur à l'attention dudit utilisateur si ce dernier n'a pas déféré à ladite invitation, et qu'il a laissé par exemple l'organe de commande manuel 4 en dehors de la position requise, soit un signal de validation pour confirmer à l'utilisateur qu'il a bien amené l'organe de commande manuel 4 dans ladite position spécifique.

Dans ce mode de réalisation particulièrement avantageux, l'interface graphique 10 permet de guider de façon optimale l'utilisateur dans son utilisation de l'autocuiseur 1, non seulement en lui indiquant de façon extrêmement claire et ergonomique les manipulations qu'il doit concrètement effectuer au niveau de l'autocuiseur 1, mais également en confirmant à l'utilisateur que les manipulations effectuées sont correctes ou au contraire en lui indiquant qu'une erreur de manipulation a été commise, et ce avec des moyens extrêmement simples, compacts, robustes et bon marché.

Avantageusement, l'interface graphique 10 est également conçue pour inviter en temps utile un utilisateur à agir sur la source de chauffe (plaque de cuisson par exemple) à laquelle est soumis le contenu dudit autocuiseur 1 pour soit régler la source de chauffe à son niveau maximal, en vue de délivrer autant d'énergie thermique que possible au contenu de l'autocuiseur 1, soit régler la source de chauffe à un niveau intermédiaire (qui peut correspondre à une puissance minimale), soit même couper la source de chauffe, afin d'optimiser le cycle de cuisson comme cela ressortira notamment de l'exemple d'utilisation de l'invention décrit ci-après.

Dans cet exemple d'utilisation du système illustré aux figures, l'utilisateur prépare un plat selon une recette contenue dans une application chargée sur un terminal 11 du genre tablette numérique tactile, ladite application incluant l'interface graphique 10.

L'utilisateur sélectionne ainsi la recette concernée au moyen de l'interface graphique 10 mise en oeuvre sur la tablette tactile formant le terminal 11. L'utilisateur peut choisir, au moyen de l'interface graphique 10, de suivre la recette pas à pas. Dans ce cas, comme cela ressort notamment de la figure 2, la recette est découpée en différentes étapes.

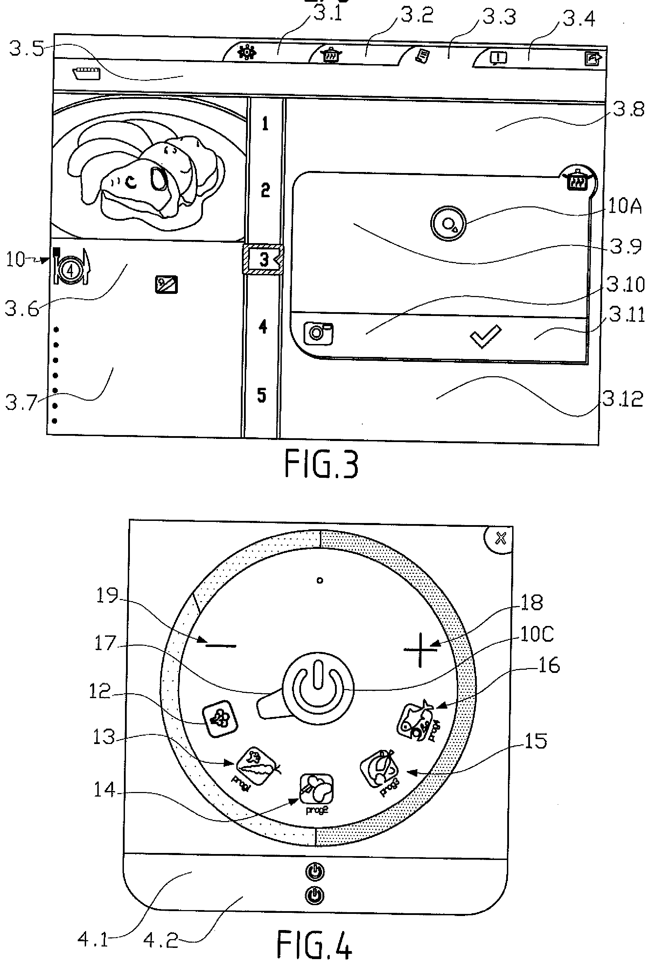

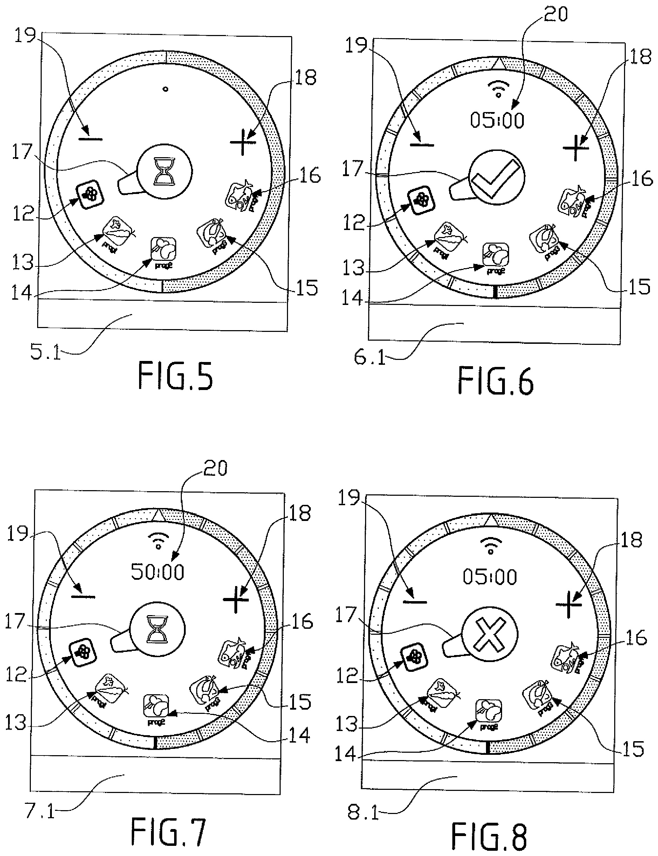

Chaque fois que l'utilisateur a terminé une étape, il procède à une action de validation (en cliquant sur un bouton virtuel) qui conduit à l'étape suivante, laquelle est illustrée en l'espèce à la figure 3. L'étape de la figure 3 implique l'utilisation de l'autocuiseur 1 pour poursuivre la recette. A cet effet, l'interface graphique 10 est avantageusement conçue pour guider l'utilisateur dans l'établissement d'une connexion sans fil entre l'autocuiseur 1 et le terminal 11, afin de permettre une assistance interactive de l'utilisateur pour la suite de la recette. A cette fin, l'interface graphique 10 propose par exemple à l'utilisateur de cliquer sur une icône 10A, pour faire ensuite apparaître à l'écran un objet graphique (du genre « *rosace* », visible sur les figures 4 et suivantes) visant à reproduire, de façon plus ou moins fidèle ou stylisée, l'interface de commande réelle constituée par l'organe de commande manuel 4 et les marquages d'identification 5, 6, 7, 8, 9 respectifs qui lui sont associés sur l'autocuiseur 1. Comme illustré à la figure 4, l'interface graphique 10 invite tout d'abord l'utilisateur à réaliser une connexion entre l'autocuiseur 1 et l'interface graphique 10 en pressant d'une part sur un bouton de mise en marche 10B dont est pourvu l'autocuiseur 1 et d'autre part un bouton virtuel de mise en marche 10C affiché par l'interface graphique 10 sur l'écran du terminal 11. Cette double opération conduit à établir une communication entre l'autocuiseur 1 et le terminal 11, de préférence par le biais de la technologique Bluetooth ®. Comme illustré aux figures 5 et 6, et comme cela est classique dans le cadre de la mise en oeuvre d'une technologie Bluetooth ®, le terminal 11 recherche tout d'abord le signal de l'autocuiseur 1 puis établit la connexion, et signale que la connexion est correctement effectuée par un message délivré par l'interface graphique 10 à l'attention de l'utilisateur (cf. figure 6). L'interface graphique 10 est ensuite conçue pour inviter l'utilisateur à déplacer l'organe de commande manuel 4 de l'autocuiseur 1 pour le placer dans une position correspondant à un programme de cuisson spécifique, c'est à dire à une valeur de consigne appropriée pour la recette concernée (cf. figure 7). Si l'utilisateur ne défère pas correctement à cette invitation, en laissant par exemple l'organe de commande manuel 4 en position de décompression, l'interface graphique 10 affiche un symbole d'erreur (en l'espèce une croix blanche sur fond rouge par exemple) et réitère son invitation à déplacer l'organe de commande manuel 4 en regard du marquage 6 correspondant en l'espèce à la valeur de consigne adéquate.

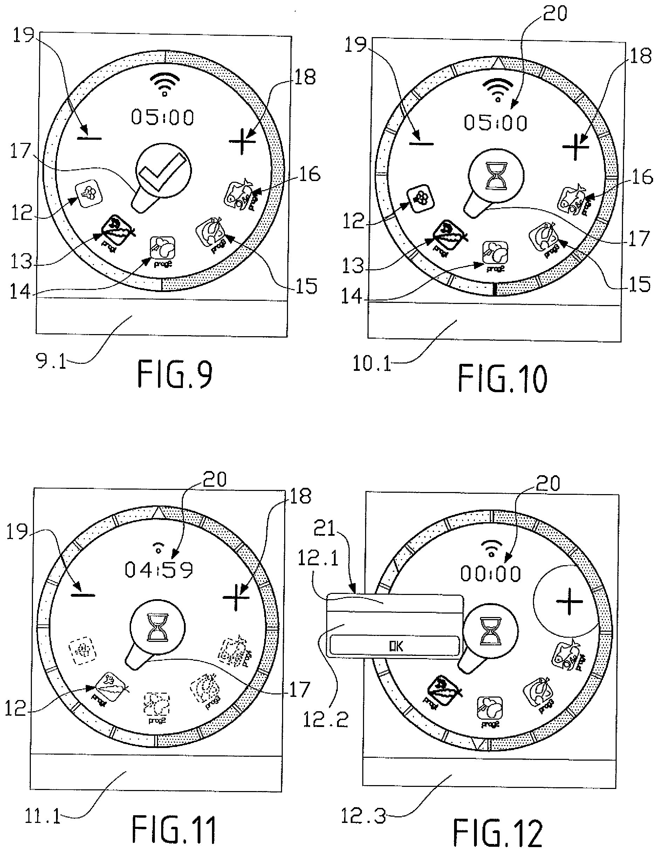

L'utilisateur procède alors au déplacement de l'organe de commande manuel 4 de sa position de décompression (marquage 5) à sa position correspondant au premier programme (dans laquelle il pointe vers le deuxième marquage d'identification 6), ce qui a pour effet concomitant de déplacer le pointeur virtuel 17 d'une position dans laquelle il pointait vers le premier pictogramme 12 à une position dans laquelle il pointe vers le deuxième pictogramme 13 (cf. figure 9). Cette position étant celle requise par l'interface graphique 10, cette dernière signale à l'utilisateur que la manipulation est correcte au moyen d'un symbole approprié représentant une validation (cf. figure 9), dessiné par exemple sur un fond vert. L'interface graphique 10 indique alors à l'utilisateur que le préchauffage est en cours et l'invite à cet effet à régler sa source de chauffe à pleine puissance de façon que la valeur de consigne puisse être atteinte au plus vite. Lorsque la valeur de consigne est atteinte, la soupape de régulation s'ouvre pour laisser échapper la vapeur afin de régler le niveau de pression, ce qui a pour effet de générer une brutale élévation de température au niveau du conduit d'échappement de vapeur, élévation qui est détectée par le capteur de température, lequel transmet l'information, par l'intermédiaire du dispositif de télécommunication, à l'interface graphique 10. Cette dernière signale alors à l'utilisateur (cf. figure 11) que la cuisson sous pression de fonctionnement est en cours et invite en conséquence l'utilisateur à réduire la puissance de la source de chauffe. Concomitamment, le signal de détection de l'atteinte de la valeur de consigne entraîne le décompte d'une durée prédéterminée de cuisson sous pression adaptée à la recette concernée. Cette durée prédéterminée peut avantageusement être affichée sous la forme d'un compte à rebours au moyen d'un afficheur virtuel 20 qui fait partie de l'interface graphique 10.

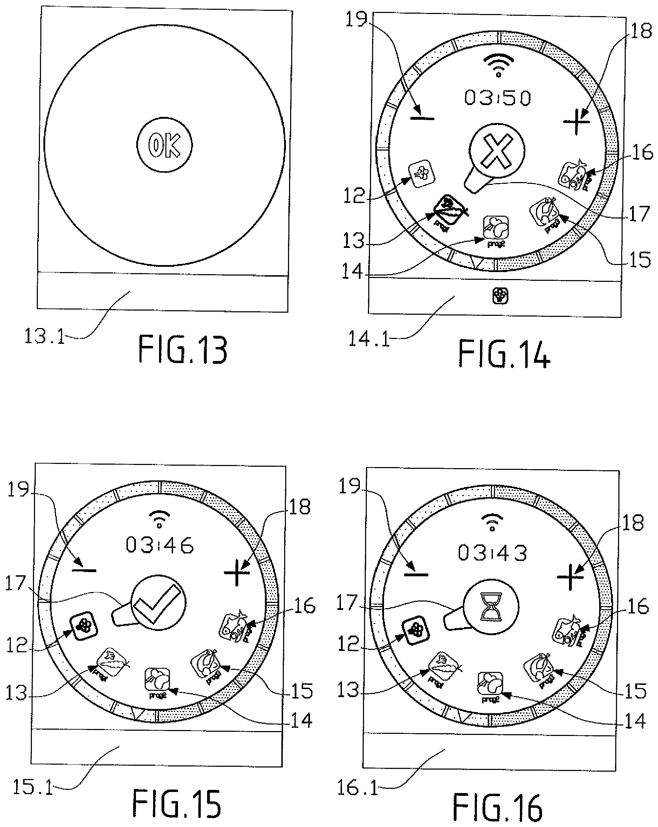

Une fois le décompte terminé, l'interface graphique 10 signale à l'utilisateur que la phase de cuisson sous pression est terminée (cf. figure 12) au moyen par exemple d'une fenêtre 21 incluant un message à cet effet. L'utilisateur est alors invité à couper la source de chauffe, un message de rappel pouvant avantageusement apparaître à cet effet (cf. figure 13), ce message ne disparaissant de l'écran du terminal 11 qu'en réponse à une action positive de validation de l'utilisateur. Le système peut alors, dans le cas d'un cycle de cuisson classique, signaler à l'utilisateur (par le biais de l'interface graphique 10) que la cuisson est terminée et l'inviter en conséquence à placer l'organe de commande 4 en position de décompression pour pouvoir ouvrir le couvercle au plus vite. Alternativement, le système peut mettre en oeuvre, de manière préférée mais optionnelle, une phase de « *cuisson douce »* dans laquelle les aliments continuent de cuire sous l'effet de l'inertie thermique, en restant au sein de l'autocuiseur 1 qui est décompressé et n'est plus soumis à un apport thermique positif de la part de la source de chauffe (hors effet d'inertie thermique), cette dernière étant coupée complètement. Afin de mettre en oeuvre cette phase terminale de « *cuisson douce* », l'utilisateur est invité à décompresser son autocuiseur en plaçant l'organe de commande manuel 4 dans la position idoine (*i.e*. la position de décompression), correspondant au premier marquage d'identification 5 en l'espèce. Tant que l'utilisateur n'a pas procédé à cette mise en position de décompression de l'organe de commande manuelle 4, l'interface graphique 10 l'invite à le faire tout en affichant un message d'erreur (sous la forme d'une croix centrale blanche sur fond rouge), comme illustré à la figure 14.

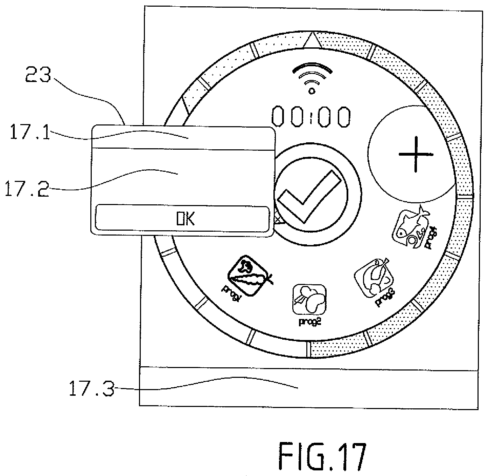

L'utilisateur manipule alors l'organe de commande manuel 4 pour l'amener en position de décompression ce qui a pour effet de déplacer simultanément le curseur virtuel 17 de façon à ce qu'il pointe vers le premier pictogramme 12 correspondant à la décompression (cf. figure 15). Cette manipulation étant correcte, l'interface graphique 10 signale par un message de validation (cf. 15) à l'utilisateur que tout est en ordre. La phase de cuisson douce se poursuit alors et l'utilisateur en est informé (cf. figure 16). Eventuellement, un décompte temporel, visible par l'utilisateur (en étant par exemple affiché par l'interface graphique 10) permet à l'utilisateur de connaître la durée prédéterminée de cette phase terminale de « *cuisson douce* », dont la fin lui est signalée par un message approprié 23, l'invitant de nouveau à s'assurer que la source de chauffe est coupée et que l'autocuiseur n'est pas sous pression (cf. figure 17).

L'invention permet ainsi de manière extrêmement simple, grâce à la caractéristique selon laquelle la position de l'organe de commande manuel 4 de l'autocuiseur commande la position d'un pointeur virtuel 17 sur une interface graphique 10, de procurer une assistance extrêmement efficace et ergonomique à un utilisateur d'autocuiseur.

L'invention concerne également en tant que tel un procédé domestique de cuisson d'aliments au moyen d'un autocuiseur 1, qui est de préférence mis en oeuvre à l'aide du système décrit dans ce qui précède.

L'ensemble de la description qui précède s'applique donc totalement, *mutatis mutandis,* au procédé domestique de cuisson selon l'invention. Ce procédé est un procédé domestique de cuisson d'aliment au moyen d'un autocuiseur 1 pourvu d'au moins un organe de commande manuel 4 mobile entre une pluralité de positions correspondant respectivement à une pluralité d'états de fonctionnement dudit autocuiseur 1.

Comme exposé précédemment, lesdites positions sont chacune associés à des marquages d'identification respectifs 5, 6, 7, 8, 9 positionnés sur l'autocuiseur 1 selon une disposition prédéterminée. Le procédé comprend la mise en oeuvre par un utilisateur, sur un terminal informatique 11 pourvu d'un écran d'affichage, d'une interface graphique 10 d'assistance à l'utilisation de l'autocuiseur 1. Conformément à l'invention, ladite interface graphique 10 affiche sur ledit écran d'affichage d'une part des pictogrammes virtuels 12, 13, 14, 15, 16 correspondant respectivement auxdits marquages d'identification 5, 6, 7, 8, 9 et positionnés à l'écran selon une disposition correspondant sensiblement à ladite disposition prédéterminée et d'autre part un pointeur virtuel 17 destiné à désigner l'un desdits pictogrammes, lesdits autocuiseur 1 et terminal 11 étant reliés par un dispositif de télécommunication sans fil conçu pour que la position dudit organe de commande manuel 4 commande la position du pointeur virtuel 17, de façon que ledit pointeur virtuel 17 désigne le pictogramme correspondant au marquage associé à la position instantanée de l'organe de commande manuel 4. L'invention concerne également bien entendu l'interface graphique 10 en tant que telle, de même que le programme d'ordinateur destiné à mettre en oeuvre cette dernière sur le terminal 11.

### Légende des figures

Figure 2
   2.1 : Coup d'oeil
   2.2 : Ingrédients et préparation
   2.3 : La recette pas à pas
   2.4 : Commentaires
   2.5 : Filet de porc aux pommes
   2.6 : Préparation 15 min
      Cuisson 17 min
      Programme
   2.7 : Ingrédients :
      - 4 pommes
      - 800 g de filet mignon de porc
      - Moutarde
      - 2 échalotes
      - 50 g de beurre
      - 20 cl de cidre
      - 2 cuillères à soupe de Calvados
   2.8 : Pelez et coupez les pommes en gros dés. Enduisez le filet mignon de moutarde. Hachez les échalotes.
   2.9 : Etape suivante
   2.10: Dans l'autocuiseur, faites revenir le filet mignon avec 50g de beurre. Ajoutez l'échalote hachée. Versez le cidre. Flambez au calvados. Assaisonnez. Fermez l'autocuiseur.
Figure 3
   3.1 : Coup d'oeil
   3.2 : Ingrédients et préparation
   3.3 : La recette pas à pas
   3.4: Commentaires
   3.5 : Filet de porc aux pommes
   3.6 : Préparation 15 min
      Cuisson 17 min
      Programme
   3.7 : Ingrédients :
      - 4 pommes
      - 800 g de filet mignon de porc
      - Moutarde
      - 2 échalotes
      - 50 g de beurre
      - 20 cl de cidre
      - 2 cuillères à soupes de Calvados
   3.8 : Dans l'autocuiseur, faites revenir le filet mignon avec 50g de beurre. Ajoutez l'échalote hachée. Versez le cidre. Flambez au calvados. Assaisonnez. Fermez l'autocuiseur.
   3.9 : Cliquez sur l'icône
   3.10 : Voir la photo
   3.11 : Etape suivante
   3.12 : Dans une poêle, faites sauter les pommes avec le reste du beurre, saupoudrez de sucre, poivrez, laissez caraméliser légèrement.
Figure 4
   4.1 : Pour commencer appuyer sur ..... de l'autocuiseur
   4.2 : Et cliquez sur ... ci-dessus
Figure 5
   5.1 : Recherche de votre autocuiseur en cours...
Figure 6
   6.1 : Félicitations, connexion réussie !
Figure 7
   7.1 : SELECTIONNEZ le prog 1 sur votre autocuiseur. ALLUMEZ votre source de chauffe au maximum.
Figure 8
   8.1 : SELECTIONNEZ le prog 1 sur votre autocuiseur.
Figure 9
   9.1 : Sélection programme OK. Mettez votre source de chauffe au maximum.
Figure 10
   10.1 : Préchauffage en cours... Mettez votre source de chauffe au maximum.
Figure 11
   11.1 : CUISSON SOUS PRESSION EN COURS... Baissez votre source de chauffe au minimum.
Figure 12
   12.1 : Terminé
   12.2 : Cuisson sous pression terminée !
   12.3 : CUISSON DOUCE EN COURS
Figure 13
   13.1 : Etes-vous sûr d'avoir coupé votre source de chauffe? CUISSON DOUCE EN COURS...
Figure 14
   14.1 : Sélectionner le PROGRAMME... sur votre autocuiseur
Figure 15
   15.1 : Sélection du programme OK.
Figure 16
   16.1 : CUISSON DOUCE EN COURS...
Figure 17
   17.1 : C'est prêt
   17.2 : Pour terminer votre cuisson, couper votre source de chauffe et décompresser votre autocuiseur.
   17.3 : C'est prêt...

## Revendications

1. Système domestique de cuisson d'aliments comprenant un autocuiseur (1) pourvu d'au moins un organe de commande manuel (4) mobile entre une pluralité de positions correspondant respectivement à une pluralité d'états de fonctionnement dudit autocuiseur (1), lesdites positions étant chacune associées à des marquages d'identification (5, 6, 7, 8, 9) respectifs positionnés sur l'autocuiseur (1) selon une disposition prédéterminée, ledit système étant **caractérisé en ce qu'**il comprend une interface graphique (10) d'assistance à l'utilisation de l'autocuiseur (1), destinée à être mise en oeuvre sur un terminal informatique (11) pourvu d'un écran d'affichage, ladite interface graphique (10) étant conçue pour afficher sur ledit écran d'affichage d'une part des pictogrammes virtuels (12, 13, 14, 15, 16) correspondant respectivement auxdits marquages d'identification (5, 6, 7, 8, 9) et positionnés à l'écran selon une disposition correspondant sensiblement à ladite disposition prédéterminée et d'autre part un pointeur virtuel (17) destiné à désigner l'un desdits pictogrammes (12, 13, 14, 15, 16), ledit système comprenant également un dispositif de télécommunication sans fil destiné à relier lesdits autocuiseur (1) et terminal (11) et conçu pour que la position dudit organe de commande manuel (4) commande la position du pointeur virtuel (17), de façon que ledit pointeur virtuel (17) désigne le pictogramme (12, 13, 14, 15, 16) correspondant au marquage (5, 6, 7, 8, 9) associé à la position instantanée de l'organe de commande manuel (4).

2. Système selon la revendication 1 **caractérisé en ce que** ledit pointeur virtuel (17) comprend un curseur conçu pour pointer vers ledit pictogramme (12, 13, 14, 15, 16) correspondant au marquage (5, 6, 7, 8, 9) associé à la position instantanée de l'organe de commande manuel (4).

3. Système selon la revendication 1 ou 2 **caractérisé en ce que** ledit organe de commande manuel (4) est rotatif, lesdits marquages (5, 6, 7, 8, 9) étant positionnés les uns à la suite des autres sur un arc de cercle.

4. Système selon l'une des revendications 1 à 3 **caractérisé en ce que** ledit autocuiseur (1) comprend un dispositif de décompression activable conçu pour faire chuter la pression régnant au sein de l'autocuiseur (1) lorsqu'il est activé, ledit organe de commande manuel (4) étant conçu pour commander l'activation dudit dispositif de décompression.

5. Système selon l'une des revendications 1 à 4 **caractérisé en ce qu'**il comprend un organe de détection de la position de l'organe de commande (4), ledit organe de détection de la position de l'organe de commande (4) étant conçu pour produire un signal représentatif de ladite position que le dispositif de télécommunication sans fil est conçu pour transmettre audit terminal (11) afin de commander la position du pointeur virtuel (17).

6. Système selon l'une des revendications 1 à 5 **caractérisé en ce que** ledit autocuiseur (1) comprend une soupape de régulation de pression conçue pour maintenir la pression régnant dans l'autocuiseur (1) sensiblement à une valeur de consigne ainsi qu'un détecteur conçu à la fois pour détecter l'instant où la pression régnant dans l'autocuiseur (1) atteint sensiblement ladite valeur de consigne pour la première fois et pour produire en réponse un signal de déclenchement que le dispositif de télécommunication sans fil est conçu pour transmettre audit terminal (11) afin de déclencher un décompte d'une durée prédéterminée par le terminal (11).

7. Système selon la revendication 6 **caractérisé en ce que** ledit autocuiseur (1) comprend un conduit d'échappement de vapeur, par lequel ladite soupape autorise la vapeur à s'échapper dès que la pression régnant au sein de l'autocuiseur excède ladite valeur de consigne, ledit détecteur comprenant un capteur de température disposé dans et/ou au voisinage dudit conduit pour permettre audit capteur de température de capter l'augmentation de température résultant dudit échappement de la vapeur à travers le conduit, et de produire en réponse ledit signal de déclenchement.

8. Système selon la revendication 6 ou 7 **caractérisé en ce que** ladite soupape de régulation de pression est une soupape tarée à tarage réglable, ledit organe de commande manuel (4) étant conçu pour régler ledit tarage, de sorte qu'au moins deux desdites positions de l'organe de commande manuel (4) correspondent respectivement à deux tarages différents.

9. Système selon l'une des revendications 6 à 8 **caractérisé en ce que** ladite interface graphique (10) est conçue pour afficher sur ledit écran d'affichage ledit décompte de ladite durée prédéterminée.

10. Système selon l'une des revendications 6 à 9 **caractérisé en ce que** l'interface graphique est conçue pour afficher sur l'écran du terminal (11) un outil virtuel de réglage (18, 19) de ladite durée prédéterminée.

11. Système selon l'une des revendications 1 à 10 **caractérisé en ce que** ladite interface graphique (10) est conçue pour inviter en temps utile un utilisateur à manipuler l'organe de commande manuel pour le placer dans une position spécifique, ladite interface (10) étant également conçue pour émettre soit un signal d'erreur à l'attention dudit utilisateur si ce dernier n'a pas déféré à ladite invitation, soit un signal de validation pour confirmer à l'utilisateur qu'il a bien amené l'organe de commande manuel (4) dans ladite position spécifique.

12. Système selon l'une des revendications 1 à 11 **caractérisé en ce que** ladite interface graphique (10) est conçue pour inviter en temps utile un utilisateur à agir sur la source de chauffe à laquelle est soumis le contenu dudit autocuiseur (1) pour soit régler la source de chauffe à son niveau maximal, soit régler la source de chauffe à un niveau intermédiaire, soit couper la source de chauffe.

13. Système selon l'une des revendications 1 à 12 **caractérisé en ce que** ledit dispositif de télécommunication sans fil comprend un module émetteur embarqué sur l'autocuiseur (1) et un module récepteur inclus dans ledit terminal (11).

14. Système selon l'une des revendications 1 à 13 **caractérisé en ce que** ledit dispositif de télécommunication sans fil est conçu pour relier lesdits autocuiseur et terminal au moyen de la technologie Bluetooth ®.

15. Procédé domestique de cuisson d'aliments au moyen d'un autocuiseur (1) pourvu d'au moins un organe de commande manuel mobile (4) entre une pluralité de positions correspondant respectivement à une pluralité d'états de fonctionnement dudit autocuiseur (1), lesdites positions étant chacune associées à des marquages d'identification respectifs (5, 6, 7, 8, 9) positionnés sur l'autocuiseur (1) selon une disposition prédéterminée, ledit procédé étant **caractérisé en ce qu'**il comprend la mise en oeuvre par un utilisateur, sur un terminal informatique (11) pourvu d'un écran d'affichage, d'une interface graphique (10) d'assistance à l'utilisation de l'autocuiseur (1), ladite interface graphique (10) affichant sur ledit écran d'affichage d'une part des pictogrammes virtuels (12, 13, 14, 15, 16) correspondant respectivement auxdits marquages d'identification (5, 6, 7, 8, 9) et positionnés à l'écran selon une disposition correspondant sensiblement à ladite disposition prédéterminée et d'autre part un pointeur virtuel (17) destiné à désigner l'un desdits pictogrammes, lesdits autocuiseur (1) et terminal (11) étant reliés par un dispositif de télécommunication sans fil conçu pour que la position dudit organe de commande manuel (4) commande la position du pointeur virtuel (17), de façon que ledit pointeur virtuel (17) désigne le pictogramme correspondant au marquage associé à la position instantanée de l'organe de commande manuel (4).

## Patentansprüche

1. Haushaltssystem zum Garen von Nahrungsmitteln mit einem Schnellkochtopf (1), der mit zumindest einem Element (4) zur manuellen Bedienung ausgestattet ist, das zwischen einer Vielzahl von Stellungen bewegt werden kann, die jeweils einer Vielzahl von Betriebszuständen des genannten Schnellkochtopfes (1) entsprechen, wobei die genannten Stellungen jeweils entsprechenden Identifizierungsmarkierungen (5, 6, 7, 8, 9) zugeordnet sind, die am Schnellkochtopf (1) in einer vorbestimmten Anordnung positioniert sind, wobei das genannte System **dadurch gekennzeichnet ist, dass** es eine grafische Benutzeroberfläche (10) zur Unterstützung beim Gebrauch des Schnellkochtopfes (1) umfasst, die dazu bestimmt ist, an einem Terminal (11) mit einem Display umgesetzt zu werden, wobei die genannte grafische Benutzeroberfläche (10) so konzipiert ist, dass sie auf dem genannten Display einerseits virtuelle Symbole (12, 13, 14, 15, 16) anzeigt, die jeweils den genannten Identifizierungsmarkierungen (5, 6, 7, 8, 9) entsprechen und auf dem Display so angeordnet sind, dass sie im Wesentlichen der genannten vorbestimmten Anordnung entsprechen, und andererseits einen virtuellen Zeiger (17) anzeigt, der dazu bestimmt ist, auf eines der genannten Symbole (12, 13, 14, 15, 16) zu deuten, wobei das genannte System außerdem eine drahtlose Telekommunikationsvorrichtung zur Verbindung des genannten Schnellkochtopfes (1) und des genannten Terminals (11) umfasst, die so ausgelegt ist, dass die Stellung des genannten Elements (4) zur manuellen Bedienung die Stellung des virtuellen Zeigers (17) derart steuert, dass der genannte virtuelle Zeiger (17) auf das Symbol (12, 13, 14, 15, 16) deutet, das der Markierung (5, 6, 7, 8, 9) entspricht, die der momentanen Stellung des Elements (4) zur manuellen Bedienung zugeordnet ist.

2. System nach Anspruch 1, **dadurch gekennzeichnet, dass** der genannte virtuelle Zeiger (17) einen Cursor umfasst, der dafür ausgelegt ist, auf das genannte Symbol (12, 13, 14, 15, 16) zu zeigen, das der Markierung (5, 6, 7, 8, 9) entspricht, die der momentanen Stellung des Elements (4) zur manuellen Bedienung zugeordnet ist.

3. System nach Anspruch 1 oder 2, **dadurch gekennzeichnet, dass** das genannte Element (4) zur manuellen Bedienung drehbar ist, wobei die genannten Markierungen (5, 6, 7, 8, 9) nacheinander auf einem Kreisbogen angeordnet sind.

4. System nach einem der Ansprüche 1 bis 3, **dadurch gekennzeichnet, dass** der genannte Schnellkochtopf (1) eine aktivierbare Vorrichtung zum Ablassen des Druckes umfasst, die so ausgelegt ist, dass sie den in dem Schnellkochtopf (1) vorherrschenden Druck abfallen lässt, wenn sie aktiviert wird, wobei das genannte Element (4) zur manuellen Bedienung so ausgelegt ist, dass es die Aktivierung der genannten Vorrichtung zum Ablassen des Druckes steuert.

5. System nach einem der Ansprüche 1 bis 4, **dadurch gekennzeichnet, dass** es ein Element zur Erkennung der Stellung des Bedienelements (4) umfasst, wobei das genannte Element zur Erkennung der Stellung des Bedienelements (4) so ausgelegt ist, dass es ein Signal erzeugt, das die genannte Stellung darstellt und von der drahtlosen Telekommunikationsvorrichtung an das genannte Terminal (11) gesendet werden kann, um die Stellung des virtuellen Zeigers (17) zu steuern.

6. System nach einem der Ansprüche 1 bis 5, **dadurch gekennzeichnet, dass** der genannte Schnellkochtopf (1) ein Ventil zur Druckregulierung umfasst, das so ausgelegt ist, dass es den in dem Schnellkochtopf (1) vorherrschenden Druck im Wesentlichen auf einem Sollwert hält, sowie einen Detektor umfasst, der dafür ausgelegt ist, sowohl den Zeitpunkt, zu dem der in dem Schnellkochtopf (1) vorherrschende Druck im Wesentlichen den genannten Sollwert zum ersten Mal erreicht, zu erkennen als auch als Reaktion ein Auslösesignal zu erzeugen, das die drahtlose Telekommunikationsvorrichtung an das genannte Terminal (11) senden kann, um einen Countdown mit einer von dem Terminal (11) vorbestimmten Dauer auszulösen.

7. System nach Anspruch 6, **dadurch gekennzeichnet, dass** der genannte Schnellkochtopf (1) einen Dampfaustrittskanal umfasst, durch den das genannte Ventil den Dampf austreten lässt, sobald der in dem Schnellkochtopf vorherrschende Druck den genannten Sollwert überschreitet, wobei der genannte Detektor einen Temperatursensor umfasst, der sich in und/oder in der Nähe des genannten Kanals befindet, damit der genannte Temperatursensor den Temperaturanstieg, der die Folge des genannten Dampfaustritts durch den Kanal ist, erfassen und als Reaktion das genannte Auslösesignal erzeugen kann.

8. System nach Anspruch 6 oder 7, **dadurch gekennzeichnet, dass** das genannte Ventil zur Druckregulierung ein Ventil mit regelbarem Ansprechdruck ist, wobei das Element (4) zur manuellen Bedienung so ausgelegt ist, dass es den genannten Ansprechdruck regelt, sodass zumindest zwei der genannten Stellungen des Elements (4) zur manuellen Bedienung jeweils zwei unterschiedlichen Ansprechdrücken entsprechen.

9. System nach einem der Ansprüche 6 bis 8, **dadurch gekennzeichnet, dass** die genannte grafische Benutzeroberfläche (10) für die Anzeige des genannten Countdowns mit der genannten vorbestimmten Dauer auf dem Display ausgelegt ist.

10. System nach einem der Ansprüche 6 bis 9, **dadurch gekennzeichnet, dass** die grafische Benutzeroberfläche für die Anzeige eines virtuellen Einstellwerkzeugs (18, 19) der genannten vorbestimmten Dauer auf dem Display (11) ausgelegt ist.

11. System nach einem der Ansprüche 1 bis 10, **dadurch gekennzeichnet, dass** die genannte grafische Benutzeroberfläche (10) so ausgelegt ist, dass sie einen Benutzer rechtzeitig auffordert, das Element zur manuellen Bedienung zu betätigen und in eine spezifische Stellung zu bringen, wobei die genannte Benutzeroberfläche (10) außerdem dafür ausgelegt ist, dem Benutzer entweder ein Fehlersignal auszugeben, wenn letzterer der genannten Aufforderung nicht gefolgt ist, oder ein Bestätigungssignal auszugeben, um dem Benutzer zu bestätigen, dass er das Element (4) zur manuellen Bedienung genau in die genannte spezifische Stellung gebracht hat.

12. System nach einem der Ansprüche 1 bis 11, **dadurch gekennzeichnet, dass** die genannte grafische Benutzeroberfläche (10) dafür ausgelegt ist, einen Benutzer rechtzeitig aufzufordern, auf die Heizquelle einzuwirken, der der Inhalt des genannten Schnellkochtopfes (1) ausgesetzt ist, um die Heizquelle entweder auf ihre höchste Stufe zu stellen, auf eine Zwischenstufe zu stellen oder auszuschalten.

13. System nach einem der Ansprüche 1 bis 12, **dadurch gekennzeichnet, dass** die genannte drahtlose Telekommunikationsvorrichtung ein in den Schnellkochtopf (1) integriertes Sendemodul und ein in das genannte Terminal (11) integriertes Empfangsmodul umfasst.

14. System nach einem der Ansprüche 1 bis 13, **dadurch gekennzeichnet, dass** die genannte drahtlose Telekommunikationsvorrichtung dafür ausgelegt ist, den genannten Schnellkochtopf und das genannte Terminal mithilfe der Bluetooth®-Technologie zu verbinden.

15. Haushaltsverfahren zum Garen von Nahrungsmitteln mithilfe eines Schnellkochtopfes (1), der mit zumindest einem Element (4) zur manuellen Bedienung ausgestattet ist, das zwischen einer Vielzahl von Stellungen bewegt werden kann, die jeweils einer Vielzahl von Betriebszuständen des genannten Schnellkochtopfes (1) entsprechen, wobei die genannten Stellungen jeweils entsprechenden Identifizierungsmarkierungen (5, 6, 7, 8, 9) zugeordnet sind, die am Schnellkochtopf (1) in einer vorbestimmten Anordnung positioniert sind, wobei das genannte Verfahren **dadurch gekennzeichnet ist, dass** es die Umsetzung durch einen Benutzer an einem Terminal (11) mit einem Display und einer grafischen Benutzeroberfläche (10) zur Unterstützung der Verwendung des Schnellkochtopfes (1) umfasst, wobei die genannte grafische Benutzeroberfläche (10) auf dem genannten Display einerseits virtuelle Symbole (12, 13, 14, 15, 16) anzeigt, die jeweils den genannten Identifizierungsmarkierungen (5, 6, 7, 8, 9) entsprechen und auf dem Display so angeordnet sind, dass sie im Wesentlichen der vorbestimmten Anordnung entsprechen, und andererseits einen virtuellen Zeiger (17) anzeigt, der dazu bestimmt ist, auf eines der genannten Symbole zu deuten, wobei der genannte Schnellkochtopf (1) und das genannte Terminal (11) durch eine drahtlose Telekommunikationsvorrichtung verbunden sind, damit die Stellung des genannten Elements (4) zur manuellen Bedienung die Stellung des virtuellen Zeigers (17) derart steuert, dass der genannte virtuelle Zeiger (17) auf das Symbol deutet, das der Markierung entspricht, die der momentanen Stellung des Elements (4) zur manuellen Bedienung zugeordnet ist.

## Claims

1. Household system for cooking food comprising a pressure cooker (1) provided with at least one manual control member (4) movable between a multitude of positions corresponding respectively to a multitude of operating states of said pressure cooker (1), said positions each being associated with respective identification markings (5, 6, 7, 8, 9) positioned on the pressure cooker (1) in a predetermined arrangement, said system being **characterised in that** it comprises a graphical interface (10) to help use the pressure cooker (1), intended to be implemented on a computer terminal (11) provided with a display screen, said graphical interface (10) being designed to display on said display screen firstly virtual pictograms (12, 13, 14, 15, 16) corresponding respectively to said identification markings (5, 6, 7, 8, 9) and positioned on the screen in an arrangement corresponding substantially to said predetermined arrangement and secondly a virtual pointer (17) intended to designate one of said pictograms (12, 13, 14, 15, 16), said system further comprising a wireless telecommunication device intended to connect said pressure cooker (1) and said terminal (11) and designed so that the position of said manual control member (4) controls the position of the virtual pointer (17), so that said virtual pointer (17) designates the pictogram (12, 13, 14, 15, 16) corresponding to the marking (5, 6, 7, 8, 9) associated with the instantaneous position of the manual control member (4).

2. System according to claim 1 **characterised in that** said virtual pointer (17) comprises a cursor designed to point to said pictogram (12, 13, 14, 15, 16) corresponding to the marking (5, 6, 7, 8, 9) associated with the instantaneous position of the manual control member (4).

3. System according to claim 1 or 2 **characterised in that** said manual control member (4) is rotatable, said markings (5, 6, 7, 8, 9) being positioned one after the other on a circular arc.

4. System according to one of claims 1 to 3 **characterised in that** said pressure cooker (1) comprises an activatable pressure relief device designed to reduce the pressure inside the pressure cooker (1) when it is activated, said manual control member (4) being designed to control the activation of said pressure relief device.

5. System according to one of claims 1 to 4 **characterised in that** it comprises a member for detecting the position of the control member (4), said member for detecting the position of the control member (4) being designed to produce a signal representative of said position which the wireless telecommunication device is designed to transmit to said terminal (11) in order to control the position of the virtual pointer (17).

6. System according to one of claims 1 to 5 **characterised in that** said pressure cooker (1) comprises a pressure regulation valve designed to maintain the pressure inside the pressure cooker (1) substantially at a setpoint value and a detector designed both to detect the time when the pressure inside the pressure cooker (1) substantially reaches said setpoint value for the first time and to produce in response a triggering signal which the wireless telecommunication device is designed to transmit to said terminal (11) in order to trigger a countdown of a predetermined duration by the terminal (11).

7. System according to claim 6 **characterised in that** said pressure cooker (1) comprises a steam escape pipe, through which said valve allows the steam to escape as soon as the pressure inside the pressure cooker exceeds said setpoint value, said detector comprising a temperature sensor arranged in and/or near said pipe to enable said temperature sensor to detect the temperature increase resulting from said escape of steam through the pipe and to produce in response said triggering signal.

8. System according to claim 6 or 7 **characterised in that** said pressure regulation valve is a calibrated valve with adjustable calibration, said manual control member (4) being designed to adjust said calibration, so that at least two of said positions of the manual control member (4) correspond respectively to two different calibrations.

9. System according to one of claims 6 to 8 **characterised in that** said graphical interface (10) is designed to display on said display screen said countdown of said predetermined duration.

10. System according to one of claims 6 to 9 **characterised in that** the graphical interface is designed to display on the screen of the terminal (11) a virtual tool (18, 19) for adjusting said predetermined duration.

11. System according to one of claims 1 to 10 **characterised in that** said graphical interface (10) is designed to prompt in good time a user to operate the manual control member to move it to a specific position, said interface (10) also being designed to emit either an error signal for the attention of said user if the user has not responded to said prompt, or a validation signal to confirm to the user that he/she has moved the manual control member (4) to said specific position.

12. System according to one of claims 1 to 11 **characterised in that** said graphical interface (10) is designed to prompt in good time a user to act on the heat source to which the content of said pressure cooker (1) is subjected to either set the heat source to its maximum level, or to set the heat source to an intermediate level, or to switch off the heat source.

13. System according to one of claims 1 to 12 **characterised in that** said wireless telecommunication device comprises a transmitter module integrated in the pressure cooker (1) and a receiver module included in said terminal (11).

14. System according to one of claims 1 to 13 **characterised in that** said wireless telecommunication device is designed to connect said pressure cooker and said terminal using Bluetooth® technology.

15. Household method for cooking food using a pressure cooker (1) provided with at least one manual control member (4) movable between a multitude of positions corresponding respectively to a multitude of operating states of said pressure cooker (1), said positions each being associated with respective identification markings (5, 6, 7, 8, 9) positioned on the pressure cooker (1) in a predetermined arrangement, said method being **characterised in that** it comprises the implementation by a user, on a computer terminal (11) provided with a display screen, of a graphical interface (10) to help use the pressure cooker (1), said graphical interface (10) displaying on said display screen firstly virtual pictograms (12, 13, 14, 15, 16) corresponding respectively to said identification markings (5, 6, 7, 8, 9) and positioned on the screen in an arrangement corresponding substantially to said predetermined arrangement and secondly a virtual pointer (17) intended to designate one of said pictograms, said pressure cooker (1) and said terminal (11) being connected by a wireless telecommunication device designed so that the position of said manual control member (4) controls the position of the virtual pointer (17), so that said virtual pointer (17) designates the pictogram corresponding to the marking associated with the instantaneous position of the manual control member (4).
